(19) **Europäisches Patentamt**
**European Patent Office**
**Office européen des brevets**

(11) **EP 1 415 955 B1**

(12) **EUROPEAN PATENT SPECIFICATION**

(45) Date of publication and mention
of the grant of the patent:
**05.03.2014 Bulletin 2014/10**

(21) Application number: **02745846.2**

(22) Date of filing: **04.07.2002**

(51) Int Cl.:
$C01G\ 23/00^{(2006.01)}$ $C04B\ 35/46^{(2006.01)}$
$H01G\ 4/12^{(2006.01)}$

(86) International application number:
**PCT/JP2002/006819**

(87) International publication number:
**WO 2003/004416 (16.01.2003 Gazette 2003/03)**

(54) **BARIUM TITANATE AND ITS PRODUCTION METHOD**

BARIUMTITANAT UND HERSTELLUNGSVERFAHREN DAFÜR

TITANATE DE BARYUM ET PROCEDE DE PRODUCTION ASSOCIE

(84) Designated Contracting States:
**AT BE BG CH CY CZ DE DK EE ES FI FR GB GR
IE IT LI LU MC NL PT SE SK TR**

(30) Priority: **04.07.2001 JP 2001203299**

(43) Date of publication of application:
**06.05.2004 Bulletin 2004/19**

(60) Divisional application:
**13000671.1**

(73) Proprietor: **Showa Denko K.K.
Tokyo 105-8518 (JP)**

(72) Inventors:
• **SHIRAKAWA, Akihiko,
Chiba-shi,
Chiba 267-0056 (JP)**

• **YOKOUCHI, Hitoshi,
Chiba-shi,
Chiba 267-0056 (JP)**

(74) Representative: **Strehl Schübel-Hopf & Partner
Maximilianstrasse 54
80538 München (DE)**

(56) References cited:
**EP-A1- 0 150 135    EP-A1- 1 130 004
EP-A1- 1 205 440    WO-A1-00/35811
WO-A1-00/35811    JP-A- 5 058 605
JP-A- 5 058 629    JP-A- 7 291 607
US-B1- 6 205 015**

Remarks:
The file contains technical information submitted after
the application was filed and not included in this
specification

**Description**

Technical Field

The present invention relates-to barium titanate employed in, for example, dielectric materials, multi-layer ceramic capacitors, and piezoelectric materials, and to a process for producing the barium titanate. More particularly the present invention relates to a barium titanate having a fine structure and a high tetragonality content, and to a process for producing the barium titanate.

Background Art

Barium titanate has been widely employed as a functional material in, among others, dielectric materials, multi-layer ceramic capacitors, and piezoelectric materials. Electronic parts of small size and light weight have been developed, and in accordance with this trend, demand has arisen for development of a process for producing barium titanate having smaller particle size and exhibiting excellent electric characteristics, such as a high dielectric constant.

Barium titanate having high tetragonality content is known to have high dielectric constant, but so far, attempts to reduce the particle size of such barium titanate to a desired level have failed, whereas in the case of barium titanate having small particle size, the tetragonality content thereof has not been increased, and thus the dielectric constant of such barium titanate cannot be increased satisfactorily.

Examples of processes for producing titanium-containing composite oxide particles such as barium titanate include a solid-phase process in which powders of an oxide and a carbonate, serving as raw materials, are mixed in, for example, a ball mill, and the resultant mixture is allowed to react at a temperature as high as about 800°C or higher, to thereby produce a product; an oxalate process in which an oxalic acid composite salt is prepared, and the composite salt is thermally decomposed, to thereby produce titanium-containing composite oxide particles; an alkoxide process_ in which a metal alkoxide serving as a raw material is subjected to hydrolysis, to thereby yield a precursor; a hydrothermal synthesis process in which a raw material is allowed to react in an aqueous solvent at high temperature and high pressure, to thereby yield a precursor; a process in which a product obtained through hydrolysis of a titanium compound is reacted with a water-soluble barium salt in a strong alkaline aqueous solution (Japanese Patent No. 1841875); and a process in which a titanium oxide sol is reacted with a barium compound in an alkaline aqueous solution (International Patent Publication WO00/35811).

Although the solid-phase process attains a low production cost, titanium-containing composite oxide particles produced through the process have a large particle size, and the particles are unsuitable for use as a functional material such as a dielectric material or a piezoelectric material. When the thus-produced particles are subjected to grinding to thereby form fine particles, strain occurs in the resultant fine particles. Therefore, barium titanate having high tetragonality content; i.e., barium titanate having high dielectric constant, is not produced.

The oxalate process enables production of particles having a particle size smaller than that of particles produced through the solid-phase process. However, particles produced through the oxalate process contain a carbonate group derived from oxalic acid. Therefore, the oxalate process cannot produce barium titanate exhibiting excellent electric characteristics.

The alkoxide process and the hydrothermal synthesis process enable production of barium titanate having a very small particle size. However, the thus-produced barium titanate contains a large amount of a hydroxyl group derived from water. Therefore, the barium titanate fails to exhibit excellent electric characteristics. Barium titanate produced through the alkoxide process contains a carbonate group.

Since the hydrothermal synthesis process is carried out at high temperature and high pressure, the process requires exclusive equipment, and thus production cost increases.

The processes disclosed in Japanese Patent No. 1841875 and International Patent Publication WO00/35811 employ potassium hydroxide or sodium hydroxide as an alkali. Therefore, the processes require a step of removing such an alkali after completion of reaction. Since barium elutes and a hydroxyl group enters the resultant barium titanate during the removal step, the barium titanate fails to have high tetragonality content.

US 6,205,015 B1 discloses a barium titanate powder in which the c-axis/a-axis ratio is in the range of about 1.003 to 1.010 and the amount of OH groups in the crystal lattice is 0.1 wt. % to 1 wt. %.

The present invention contemplates provision of a barium titanate having a small particle size, containing small amounts of unwanted impurities, and exhibiting excellent electric characteristics, which can be employed for forming a dielectric ceramic thin film required for a small-sized capacitor which enables production of a small-sized electronic apparatus; and a process for producing the barium titanate.

Disclosure of the Invention

As a result of extensive investigations aimed at solving the aforementioned problems, the present inventors have found that, when a titanium oxide sol is reacted with a barium compound in an alkaline solution containing a basic compound, the basic compound is removed in the form of gas after completion of reaction, and the resultant reaction mixture is fired, there can be produced barium titanate having a large BET specific surface area and a high tetragonality content, which cannot be produced through a conventional production process. The present invention has been accomplished on the basis of this finding.

Accordingly, the present invention provides the following.

(1) A barium titanate comprising at least one element selected from the group consisting of Sn, Zr, Ca, Sr, Pb, La, Ce, Mg, Bi, Ni, Al, Si, Zn, B, Nb, W, Mn, Fe, Cu, and Dy, said at least one element being in an amount of less than 5 mol% (inclusive of 0 mol%) on the basis of the entirety of $BaTiO_3$, wherein BET specific surface area x (unit: $m^2/g$), and the ratio y of the c-axis length (unit: nm) of a crystal unit lattice to the a-axis length (unit: nm) of the crystal unit lattice as measured by means of a Rietveld method satisfy the following relations:

$$y = \text{c-axis length/a-axis length}$$

$$y \geq 1.011 - 8.8 \times 10^{-6} \times x^3 \text{ (wherein x is greater than } 0.1 \text{ and not more than 9.7)}$$

$$y \geq 1.003 \ (x > 9.7).$$

(2) A barium titanate according to (1) above, which is in the form of powder.

(3) A process for producing a barium titanate as recited in (1) or (2) above, comprising reacting a titanium oxide sol with a barium compound in an alkaline solution containing a basic compound, the process comprising a step of reacting the titanium oxide sol with the barium compound while the concentration of a carbonate group contained in the resultant reaction mixture is maintained at 500 mass ppm or less as reduced to $CO_2$; a step of removing the basic compound in the form of gas after completion of reaction; and a step of firing the resultant reaction mixture.

(4) A process for producing a barium titanate according to (3) above, wherein the titanium oxide sol is produced through hydrolysis of a titanium compound under acidic conditions.

(5) A process for producing a barium titanate according to (3) or (4) above, wherein the titanium oxide sol contains brookite-type crystals.

(6) A process for producing a barium titanate according to any one of (3) through (5) above, wherein the basic compound is a substance which can be gasified through evaporation, sublimation, and/or thermal decomposition at a temperature at which firing is performed, or lower, and at atmospheric pressure or at a reduced pressure.

(7) A process for producing a barium titanate according to (6) above, wherein the basic compound is an organic base.

(8) A process for producing a barium titanate according to any one of (3) through (7) above, wherein the alkaline solution has a pH of 11 or more.

(9) A process for producing a barium titanate according to any one of (3) through (8) above, wherein the step of removing the basic compound in the form of gas is carried out at a temperature falling within a range of room temperature to a temperature at which firing is performed and at atmospheric pressure or reduced pressure.

(10) A process for producing a barium titanate according to any one of (3) through (8) above, wherein the firing step includes the step of removing the basic compound in the form of gas.

(11) A process for producing a barium titanate according to any one of (3) through (10) above, wherein the firing step is carried out at about 300 to about 1,200°C.

(12) A process for producing a barium titanate according to any one of (3) through (11) above, wherein the reaction mixture of the titanium oxide sol and the barium compound contains a compound of at least one element selected from the group consisting of Sn, Zr, Ca, Sr, Pb, La, Ce, Mg, Bi, Ni, Al, Si, Zn, B, Nb, W, Mn, Fe, Cu, and Dy.

(13) A dielectric ceramic comprising a barium titanate as recited in (1) or (2) above.

(14) A capacitor comprising a dielectric ceramic as recited in (13) above.

Mode for Carrying Out the Invention

The present invention will next be described in detail.

A characteristic feature of the barium titanate of the present invention resides in that the BET specific surface area x (unit: $m^2/g$), and the ratio y of the c-axis length (unit: nm) of a crystal unit lattice to the a-axis length (unit: nm) of the crystal unit lattice as measured by means of a Rietveld method satisfy the following relations:

$$y = c\text{-}axis\ length/a\text{-}axis\ length$$

$$y \geq 1.011 - 8.8 \times 10^{-6} \times x^3\ (wherein\ x\ is\ greater$$
$$than\ 0.1\ and\ not\ more\ than\ 9.7)$$

$$y \geq 1.003\ (x > 9.7).$$

The barium titanate of the present invention; i.e., $BaTiO_3$, is one type of perovskite-type compound represented by the formula $ABO_3$, wherein A is Ba and B is Ti. The barium titanate may contain at least one element selected from the group consisting of Sn, Zr, Ca, Sr, Pb, La, Ce, Mg, Bi, Ni, Al, Si, Zn, B, Nb, W, Mn, Fe, Cu, and Dy, said at least one element being in an amount of less than 5 mol% on the basis of the entirety of $BaTiO_3$.

When the ratio of the c-axis length (hereinafter may be abbreviated as "c") to the a-axis length (hereinafter may be abbreviated as "a"); i.e., c/a (i.e., the aforementioned ratio y), is high, the tetragonality content becomes high, and thus the dielectric constant becomes high.

The barium titanate of the present invention has a small particle size, has a high electric constant, and exhibits excellent electric characteristics. Therefore, a small-sized electronic part such as a multi-layer ceramic capacitor can be produced from a dielectric material containing the barium titanate, such as a dielectric ceramic material. Furthermore, an electronic apparatus of small size and a light weight can be produced from such an electronic part.

In general, barium titanate having a BET specific surface area of less than 0.1 $m^2/g$; i.e., barium titanate having a very large particle size, is not effective for producing a small-sized electronic apparatus. In contrast, barium titanate having a BET specific surface area of more than 0.1 $m^2/g$ and less than 9.7 $m^2/g$ and satisfying the following relations is effective for producing a small-sized electronic apparatus: $y \geq 1.011 - 8.8 \times 10^{-6} \times x^3$ (wherein y represents the c/a ratio, and x represents the BET specific surface area (unit: $m^2/g$)). In addition, barium titanate having a BET specific surface area of more than 9.7 $m^2/g$ and a c/a ratio of more than 1.003 is effective for producing a small-sized electronic apparatus, since a powder satisfying the following relation: $y \geq 1.011 - 8.8 \times 10^{-6} \times x^3$ is obtained when the barium titanate is subjected to heat treatment.

The production process of the present invention will next be described.

No particular limitation is imposed on the titanium oxide sol employed in the present invention, but a titanium oxide sol containing titanium oxide containing brookite-type crystals is preferred. So long as the titanium oxide sol contains brookite-type crystals, the titanium oxide sol may contain brookite-type titanium oxide singly, or the titanium oxide sol may contain rutile-type titanium oxide and anatase-type titanium oxide. When the titanium oxide sol contains rutile-type titanium oxide and anatase-type titanium oxide, no particular limitation is imposed on the amount of brookite-type titanium oxide contained in the sol. The amount of the brookite-type titanium oxide is typically 1 to 100 mass%, preferably 10 to 100 mass%, more preferably 50 to 100 mass%. In order to enhance dispersibility of titanium oxide particles in a solvent, titanium oxide having a crystalline structure rather than an amorphous structure is preferably employed, because titanium oxide having a crystalline structure tends to remain in the form of primary particles. Particularly, brookite-type titanium oxide is preferred, because it exhibits excellent dispersibility. The reason why brookite-type titanium oxide exhibits excellent dispersibility has not been clarified, but conceivably, the high dispersibility of brookite-type titanium oxide relates to brookite-type titanium oxide having a zeta potential higher than that of rutile-type titanium oxide or anatase-type titanium oxide.

Examples of the process for producing titanium oxide particles containing brookite-type crystals include a production process in which anatase-type titanium oxide particles is subjected to heat treatment, to thereby produce titanium oxide particles containing brookite-type crystals; and a liquid-phase production process in which a solution of a titanium compound such as titanium tetrachloride, titanium trichloride, titanium alkoxide, or titanium sulfate is neutralized or hydrolyzed, to thereby produce a titanium oxide sol containing dispersed titanium oxide particles.

When titanium-containing composite oxide particles are produced from titanium oxide particles containing brookite-type crystals, from the viewpoints of small size of the titanium oxide particles and excellent dispersibility of the particles, a preferred process therefor is such that a titanium salt is hydrolyzed in an acidic solution to thereby produce titanium oxide particles in the form of titanium oxide sol. Specifically, the following processes are preferred: a process in which titanium tetrachloride is added to hot water at 75 to 100°C, and the titanium tetrachloride is hydrolyzed at a temperature falling within the range of 75°C to the boiling point of the solution, while the concentration of chloride ions is controlled, to thereby produce titanium oxide particles containing brookite-type crystals in the form of titanium oxide sol (Japanese Patent Application Laid-Open (*kokai*) No. 11-043327); and a process in which titanium tetrachloride is added to hot water of 75 to 100°C, and, in the presence of either or both of nitrate ions and phosphate ions, the titanium tetrachloride is hydrolyzed at a temperature falling within the range of 75°C to the boiling point of the solution, while the total concentration of chloride ions, nitrate ions, and phosphate ions is controlled, to thereby produce titanium oxide particles containing brookite-type crystals in the form of titanium oxide sol (International Patent Publication WO99/58451).

The thus-produced titanium oxide particles containing brookite-type crystals generally have a primary particle size of 5 to 50 nm. When the primary particle size exceeds 50 nm, titanium-containing composite oxide particles produced from the titanium oxide particles have a large particle size, and the composite oxide particles are unsuitable for use as a functional material such as a dielectric material or a piezoelectric material. In contrast, when the primary particle size is less than 5 nm, difficulty is encountered in handling of the titanium oxide particles during the production thereof.

In the production process of the present invention, when a titanium oxide sol obtained through hydrolysis of a titanium salt in an acidic solution is employed, no particular limitation is imposed on the crystal form of titanium oxide particles contained in the sol; i.e., the crystal form of the titanium oxide particles is not limited to a brookite type.

When a titanium salt such as titanium tetrachloride or titanium sulfate is hydrolyzed in an acidic solution, as the reaction rate is reduced as compared with the case where hydrolysis is carried out in a neutral or alkaline solution, a titanium oxide sol containing titanium oxide particles having a primary particle size and exhibiting excellent dispersibility is produced. In addition, as anions such as chloride ions and sulfate ions tend not to enter the thus-produced titanium oxide particles, when titanium-containing composite oxide particles are produced from the titanium oxide sol, the amount of anions which enter the composite oxide particles can be reduced.

Meanwhile, when a titanium salt is hydrolyzed in a neutral or alkaline solution, the reaction rate increases, and large amounts of nuclei are generated in an early stage. As a result, a titanium oxide sol containing titanium oxide particles of a small size but exhibiting poor dispersibility is produced, and the titanium oxide particles form wig-shaped aggregates. When titanium-containing composite oxide particles are formed from such a titanium oxide sol, although the resultant particles have a small particle size, the particles exhibits poor dispersibility. In addition, anions tend to enter the inside of the titanium oxide particles, and removal of the anions in the subsequent step becomes difficult.

No particular limitation is imposed on the process for producing a titanium oxide sol through hydrolysis of a titanium salt in an acidic solution, so long as acidity of the resultant reaction mixture can be maintained. However, preferably, there is carried out a process in which a titanium tetrachloride serving as a raw material is hydrolyzed in a reactor equipped with a reflux condenser, and escape of the thus-generated chlorine from the reactor is suppressed, thereby maintaining acidity of the resultant reaction mixture (Japanese Patent Application Laid-Open (*kokai*) No. 11-43327).

The concentration of a titanium salt (i.e., a raw material) contained in an acidic solution is preferably 0.01 to 5 mol/L. When the concentration exceeds 5 mol/L, the reaction rate of hydrolysis increases, and thus a titanium oxide sol containing titanium oxide particles of large particle size and exhibiting poor dispersibility is obtained, whereas when the concentration is less than about 0.01 mol/L, the concentration of the resultant titanium oxide decreases, resulting in poor productivity.

The barium compound employed in the production process of the present invention preferably exhibits water-solubility. Typically, the barium compound is, for example, a hydroxide, a nitrate, an acetate, or a chloride. These compounds may be employed singly, or in combination of two or more species by mixing at arbitrary proportions. Specific examples of the barium compound which may be employed include barium hydroxide, barium chloride, barium nitrate, and barium acetate.

The barium titanate of the present invention can be produced through a process in which titanium oxide particles containing brookite-type crystals are reacted with a barium compound; or a process in which a titanium salt is hydrolyzed in an acidic solution, and the resultant titanium oxide sol is reacted with a barium compound.

Preferably, a reaction is caused to proceed in an alkaline solution containing a basic compound. The pH of the solution is preferably at least 11, more preferably at least 13, much more preferably at least 14. When the pH of the solution is adjusted to at least 14, titanium-containing composite oxide particles having smaller particle size can be produced. Preferably, a basic compound (e.g., an organic basic compound) is added to the resultant reaction mixture, to thereby maintain the pH of the mixture at 11 or more.

No particular limitation is imposed on the basic compound to be added but, preferably, the basic compound is a substance which can be gasified through evaporation, sublimation, and/or thermal decomposition at or below a temperature at which firing is performed and at atmospheric pressure or reduced pressure. Preferred examples of the basic compound which may be employed include TMAH (tetramethylammonium hydroxide) and choline. When an alkali metal hydroxide such as lithium hydroxide, sodium hydroxide, or potassium hydroxide is added, such an alkali metal remains in the resultant titanium-containing composite oxide particles. Therefore, when the composite oxide particles are subjected to molding and sintering, to thereby form a functional material such as a dielectric material or a piezoelectric material, properties of the functional material may be deteriorated. Thus, addition of the aforementioned basic compound (e.g., tetramethylammonium hydroxide) is preferred.

Furthermore, when the concentration of a carbonate group (including carbonate species such as $CO_2$, $H_2CO_3$, $HeO_3$, and $CO_3^{2-}$) contained in the reaction mixture is controlled, barium titanate having high c/a can be produced reliably. The concentration of a carbonate group contained in the reaction mixture (as reduced to $CO_2$, hereinafter the same shall apply unless otherwise specified) is preferably 500 mass ppm or less, more preferably 1 to 200 mass ppm, much more preferably 1 to 100 mass ppm. When the concentration of a carbonate group falls outside this range, barium titanate having high c/a may not be produced.

In the reaction mixture, preferably, the concentration of titanium oxide particles or a titanium oxide sol is regulated to 0.1 to 5 mol/L, and the concentration of a barium-containing metallic salt as reduced to a metal oxide is regulated to 0.1 to 5 mol/L. In addition, a compound of at least one element selected from the group consisting of Sn, Zr, Ca, Sr, Pb, La, Ce, Mg, Bi, Ni, Al, Si, Zn, B, Nb, W, Mn, Fe, Cu, and Dy may be added to the reaction mixture such that the resultant barium titanate contains such an element in an amount of less than 5 mol% on the basis of the entirety of $BaTiO_3$. When, for example, a capacitor is produced from the barium titanate, the type and amount of the element added to the reaction mixture may be determined in accordance with intended characteristics (including temperature characteristics) of the capacitor.

While being stirred, at ambient pressure, the thus-prepared alkaline solution is typically heated to 40°C to the boiling point of the solution, preferably 80°C to the boiling point of the solution, to thereby allow reaction to proceed. The reaction time is typically at least one hour, preferably at least four hours.

In general, a slurry obtained through the reaction is subjected to a process employing, for example, electrodialysis, ion exchange, washing with water, washing with acid, or permeation membrane, to thereby remove impurity ions. However, while the impurity ions are removed, barium contained in the resultant barium titanate is ionized and partially dissolved in the slurry, and thus compositional proportions of the barium titanate are unsatisfactorily regulated to desired proportions. In addition, as crystal defects are generated in the barium titanate, the c/a ratio of the barium titanate is reduced. Therefore, preferably, removal of impurities such as a basic compound is carried out through the below-described process rather than the aforementioned process.

When a slurry produced through the above-described reaction is subjected to firing, the particles of the present invention can be produced. Through firing of the slurry, the crystallinity of titanium-containing composite oxide particles can be enhanced, and impurities remaining in the slurry, such as anions (e.g., chloride ions, sulfate ions, and phosphate ions) and a basic compound (e.g., tetramethylammonium hydroxide), can be removed in the form of gas through evaporation, sublimation, and/or thermal decomposition. Typically, firing is carried out at 300 to 1,200°C. No particular limitation is imposed on the firing atmosphere, but typically, firing is carried out in air.

If desired, from the viewpoint of handing, the slurry may be subjected to solid-liquid separation before firing. The solid-liquid separation process includes the steps of precipitation, concentration, filtration, and/or drying. When the steps of precipitation, concentration, and filtration are carried out, a flocculant or a dispersant may be employed in order to increase (or decrease) the precipitation rate or the filtration rate. In a drying step, liquid components are evaporated or sublimated through, for example, reduced-pressure drying, hot-air drying, or freeze-drying.

Before firing of the slurry, impurities such as a basic compound may be removed in the form of gas from the slurry at a temperature falling within a range of room temperature to a temperature at which firing is performed and at atmospheric or reduced pressure.

The thus-produced barium titanate exhibits excellent electric characteristics, in which the BET specific surface area x (unit: $m^2/g$), and the ratio y of the c-axis length (unit: nm) of a crystal unit lattice to the a-axis length (unit: nm) of the crystal unit lattice as measured by means of a Rietveld method satisfy the following relations:

$$y = \text{c-axis length/a-axis length}$$

$$y \geq 1.011 - 8.8 \times 10^{-6} \times x^3 \text{ (wherein x is greater than 0.1 and not more than 9.7)}$$

$$y \geq 1.003 \ (x > 9.7)^{-}.$$

Examples

The present invention will next be described in detail by way of Examples, which should not be construed as limiting the invention thereto.

Example 1:

An aqueous solution containing 0.25 mol/L titanium tetrachloride (product of Sumitomo Sitix, purity: 99.9%) was placed in a reactor equipped with a reflux condenser, and the solution was heated to a temperature near its boiling point, while the escape of chloride ions was suppressed, whereby acidity of the solution was maintained. The solution was maintained at the temperature for 60 minutes, and the titanium tetrachloride was hydrolyzed, to thereby yield a titanium oxide sol. A portion of the thus-obtained titanium oxide sol was dried at 110°C, and the titanium oxide was subjected to crystallographic analysis by use of an X-ray diffraction apparatus (RAD-B Rotor Flex, product of Rigaku Corporation). As a result, the titanium oxide was found to be brookite-type titanium dioxide.

Barium hydroxide octahydrate (product of Barium Chemicals Co., Ltd. (?)) (126 g), and an aqueous solution (456 g) which had been prepared by feeding carbon dioxide gas to a 20 mass% aqueous solution of tetramethylammonium hydroxide (TMAH) (product of Sachem Showa) such that the concentration of a carbonate group contained in the solution became 60 mass ppm (as reduced to $CO_2$, hereinafter the same shall apply unless otherwise specified) were added to a reactor equipped with a reflux condenser, and the resultant mixture was heated to 95°C in the reactor while the pH of the mixture was maintained at 14. A titanium oxide sol (titanium oxide concentration: 15 mass%) (213 g) which had been prepared through precipitation and concentration of the above-obtained titanium oxide sol was added dropwise to the reactor at a rate of 7 g/minute.

The resultant mixture was heated to 110°C, and maintained at the temperature under stirring for four hours, to thereby allow reaction to proceed. The thus-produced slurry was left to cool to 50°C, and then the thus-cooled slurry was subjected to filtration. The filter cake was dried at 300°C for five hours, to thereby produce a fine powder. The actual yield of the powder was found to be 99.8% the theoretical yield calculated from the amounts of the titanium oxide and barium hydroxide employed in the reaction. In order to crystallize the powder, the powder was maintained in air at 880°C for two hours. In this case, the rate of temperature increase was regulated to 20°C/minute.

The resultant powder was subjected to X-ray diffraction analysis by use of an X-ray diffraction apparatus (RAD-B Rotor Flex, product of Rigaku Corporation). As a result, the powder was found to be perovskite-type $BaTiO_3$. On the basis of X-ray diffraction intensity data, the c/a ratio of the powder was obtained by means of a Rietveld method, and found to be 1.0104. The specific surface area S of the powder was measured by means of a BET method, and found to be 7.1 $m^2$/g. The above-obtained c/a ratio was found be greater than the c/a ratio calculated from the aforementioned formula on the basis of the above-measured surface area; i.e., 1.0079. The amount of a carbonate group contained in the sample (powder) was measured through infrared spectroscopy. The amount of a carbonate group was found to be about 1 mass% as reduced to barium carbonate. The sample was found to exhibit no sharp absorption peak in the vicinity of 3,500 $cm^{-1}$ such an absorption peak is known to appear, like the case of carbonate group, when a hydroxyl group is present in a crystal lattice.

Example 2:

A perovskite-type $BaTiO_3$ was produced in a manner similar to that of Example 1. The $BaTiO_3$ was crystallized at 600°C for two hours. The specific surface area and c/a ratio of the resultant $BaTiO_3$ were measured in a manner similar to that of Example 1, and found to be 25 $m^2$/g and 1.0032, respectively.

Example 3:

A perovskite-type $BaTiO_3$ was produced in a manner similar to that of Example 1. The $BaTiO_3$ was crystallized at 950°C for two hours. The specific surface area and c/a ratio of the resultant $BaTiO_3$ were measured in a manner similar to that of Example 1, and found to be 4.1 $m^2$/g and 1.0106, respectively. The thus-obtained c/a ratio was found to be greater than the c/a ratio calculated from the aforementioned formula; i.e., 1.0104.

Example 4:

A perovskite-type BaTiO$_3$ was produced in a manner similar to that of Example 1. The BaTiO$_3$ was crystallized at 1,200°C for two hours. The specific surface area and c/a ratio of the resultant BaTiO$_3$ were measured in a manner similar to that of Example 1, and found to be 0.5 m$^2$/g and 1.0110, respectively. The thus-obtained c/a ratio was found to be equal to the c/a ratio calculated from the aforementioned formula; i.e., 1.0110.

Example 5:

The procedure of Example 1 was repeated, except that the amount of TMAH to be added was reduced and the pH of the alkaline solution was changed to 11, to thereby synthesize a barium titanate. The actual yield of the barium titanate was found to be 98% the theoretical yield. The barium titanate was crystallized at 880°C for two hours. The specific surface area and c/a ratio of the resultant sample were measured in a manner similar to that of Example 1, and found to be 7.3 m$^2$/g and 1.0102, respectively. The thus-obtained c/a ratio was found to be greater than the c/a ratio calculated from the aforementioned formula; i.e., 1.0076.

Example 6:

The procedure of Example 1 was repeated, except that a choline aqueous solution having a carbonate group content of 75 mass ppm was employed in place of the TMAH aqueous solution, to thereby synthesize a barium titanate. The actual yield of the barium titanate was found to be 99.9% the theoretical yield. The barium titanate was crystallized at 880°C for two hours. The specific surface area and c/a ratio of the resultant sample were measured in a manner similar to that of Example 1, and found to be 7 m$^2$/g and 1.0103, respectively. The thus-obtained c/a ratio was found to be greater than the c/a ratio calculated from the aforementioned formula; i.e., 1.0080.

Example 7:

The procedure of Example 1 was repeated, except that a commercially available anatase-type titanium oxide sol (STS-02, product of Ishihara Sangyo Kaisya Ltd.) was employed in place of the brookite-type titanium oxide sol synthesized in Example 1, to thereby synthesize a barium titanate. The actual yield of the barium titanate was found to be 99.8% the theoretical yield. The barium titanate was crystallized at 880°C for two hours. The specific surface area and c/a ratio of the resultant sample were measured in a manner similar to that of Example 1, and found to be 7.7 m$^2$/g and 1.0071, respectively. The thus-obtained c/a ratio was found to be greater than the c/a ratio calculated from the aforementioned formula; i.e., 1.0070.

Example 8:

The procedure of Example 1 was repeated, except that a TMAH having a carbonate group content of 110 mass ppm was employed in place of the TMAH having a carbonate group content of 60 mass ppm, to thereby synthesize a barium titanate. The actual yield of the barium titanate was found to be 99.8% the theoretical yield. The barium titanate was crystallized at 880°C for two hours. The specific surface area and c/a ratio of the resultant sample were measured in a manner similar to that of Example 1, and found to be 7.3 m$^2$/g and 1.0099, respectively. The thus-obtained c/a ratio was found to be greater than the c/a ratio calculated from the aforementioned formula; i.e., 1.0076.

Example 9:

The procedure of Example 1 was repeated, except that a TMAH having a carbonate group content of 215 mass ppm was employed in place of the TMAH having a carbonate group content of 60 mass ppm, to thereby synthesize a barium titanate. The actual yield of the barium titanate was found to be 99.7% the theoretical yield. The barium titanate was crystallized at 880°C for two hours. The specific surface area and c/a ratio of the resultant sample were measured in a manner similar to that of Example 1, and found to be 7.5 m$^2$/g and 1.0092, respectively. The thus-obtained c/a ratio was found to be greater than the c/a ratio calculated from the aforementioned formula; i.e., 1.0073.

Example 10:

The procedure of Example 1 was repeated, except that a TMAH having a carbonate group content of 490 mass ppm was employed in place of the TMAH having a carbonate group content of 60 mass ppm, to thereby synthesize a barium titanate. The actual yield of the barium titanate was found to be 99.4% the theoretical yield. The barium titanate was crystallized at 880°C for two hours. The specific surface area and c/a ratio of the resultant sample were measured in a manner similar to that of Example 1, and found to be 8.1 $m^2$/g and 1.0065, respectively. The thus-obtained c/a ratio was found to be greater than the c/a ratio calculated from the aforementioned formula; i.e., 1.0063.

Example 11:

The procedure of Example 1 was repeated, except that a commercially available anatase-type titanium oxide sol (ST-02, product of Ishihara Sangyo Co., Ltd.) was employed in place of the brookite-type titanium oxide sol synthesized in Example 1, to thereby synthesize a barium titanate. The actual yield of the barium titanate was found to be 99.8% the theoretical yield. The barium titanate was crystallized at 880°C for two hours. The specific surface area and c/a ratio of the resultant sample were measured in a manner similar to that of Example 1, and found to be 7.7 $m^2$/g and 1.0071, respectively. The thus-obtained c/a ratio was found to be greater than the c/a ratio calculated from the aforementioned formula; i.e., 1.0070.

Comparative Example 1:

An oxalic acid aqueous solution was heated to 80°C under stirring, and an aqueous solution of a mixture of $BaCl_2$ and $TiCl_4$ was added dropwise to the oxalic acid aqueous solution, to thereby yield barium titanyl oxalate. The thus-obtained sample was washed with water for removing chlorine therefrom, and subsequently the sample was thermally decomposed at 950°C, to thereby produce $BaTiO_3$. The specific surface area and c/a ratio of the resultant $BaTiO_3$ were measured in a manner similar to that of Example 1, and found to be 4 $m^2$/g and 1.0088, respectively. The thus-obtained c/a ratio was found to be smaller than the c/a ratio calculated from the aforementioned formula; i.e., 1.0104. The amount of a carbonate group contained in the sample ($BaTiO_3$) was measured by use of an infrared spectrometer, and as a result, the amount of a carbonate group was found to be 8 mass% as reduced to barium carbonate. Since a large amount of a carbonate group (i.e., an impurity) is generated in the $BaTiO_3$, conceivably, the $BaTiO_3$ has a low tetragonality content; i.e., dielectric characteristics of the $BaTiO_3$ serving as a dielectric material are unsatisfactory.

Comparative Example 2:

The brookite-type titanium oxide sol synthesized in Example 1 (667 g), barium hydroxide octahydrate (592 g) (Ba/Ti mol ratio: 1.5), and ion exchange water (1 L) were placed in a 3-L autoclave, and the resultant mixture was subjected to hydrothermal treatment under saturation vapor pressure at 150°C for one hour. The resultant sample was washed with water for removing excess barium therefrom, and the sample was crystallized at 800°C for two hours. The specific surface area and c/a ratio of the resultant sample were measured in a manner similar to that of Example 1, and found to be 6.9 $m^2$/g and 1.0033, respectively. The thus-obtained c/a ratio was found to be smaller than the c/a ratio calculated from the aforementioned formula; i.e., 1.0081. The sample was evaluated by use of an infrared spectrometer, and found to exhibit a steep absorption peak in the vicinity of 3,500 $cm^{-1}$ corresponding to a hydroxyl group contained in a crystal lattice. Conceivably, when barium titanate is produced through a hydrothermal synthesis method, because a hydroxyl group enters a crystal lattice, the resultant barium titanate has a low tetragonality content.

Comparative Example 3:

A perovskite-type $BaTiO_3$ fine powder was produced in a manner similar to that of Example 1. The powder was crystallized at 300°C for two hours. The specific surface area and c/a ratio of the resultant powder were measured in a manner similar to that of Example 1, and found to be 45 $m^2$/g and 1.0000, respectively. Comparative Example 4:
The procedure of Example 1 was repeated, except that TMAH was not added, to thereby synthesize a barium titanate. In this case, the pH of the alkaline solution became 10.2. The actual yield of the powder was found to be 86% the theoretical yield. The results show that when the pH of the alkaline solution is lowered, the yield of a barium titanate decreases to a non-practical level. Comparative Example 5:
The procedure of Example 1 was repeated, except that KOH was employed in place of TMAH, to thereby synthesize a barium titanate. The actual yield of the barium titanate was found to be 99.9% the theoretical yield. The barium titanate was subjected to filtration, and the resultant sample was washed with water until the K content became 100 ppm. The sample was crystallized at 800°C for two hours. The specific surface area and c/a ratio of the resultant sample were measured in a manner similar to that of Example 1, and found to be 9 $m^2$/g and 1.0030, respectively. The thus-obtained c/a ratio was found to be smaller than the c/a ratio calculated from the aforementioned formula; i.e., 1.0046. The sample was evaluated by use of an infrared spectrometer, and found to exhibit a steep absorption peak in the vicinity of 3,500 $cm^{-1}$ corresponding to a hydroxyl group contained in a crystal lattice. Furthermore, the Ba/Ti mol ratio was found to have decreased 0.007 from that before washing of the sample; i.e., Ba, along with K, was eluted through washing of the sample.

Comparative Example 6:

The procedure of Example 1 was repeated, except that a TMAH having a carbonate group content of 1,000 mass ppm was employed in place of the TMAH having a carbonate group content of 60 mass ppm, to thereby synthesize a barium titanate. The actual yield of the barium titanate was found to be 99.4% the theoretical yield. The barium titanate was crystallized at 880°C for two hours. The specific surface area and c/a ratio of the resultant sample were measured in a manner similar to that of Example 1, and found to be 8.3 $m^2/g$ and 1.0058, respectively. The thus-obtained c/a ratio was found to be smaller than the c/a ratio calculated from the aforementioned formula; i.e., 1.0060.

Industrial Applicability

A barium titanate in which the BET specific surface area x (unit: $m^2/g$), and the ratio y of the c-axis length (unit: nm) of a crystal unit lattice to the a-axis length (unit: nm) of the crystal unit lattice as measured by means of a Rietveld method satisfy the following relations:

$$y = \texttt{c-axis length/a-axis length}$$

$$y \geq 1.011 - 8.8 \times 10^{-6} \times x^3 \text{ (wherein x is greater}$$
$$\text{than} \qquad 0.1 \text{ and not more than } 9.7)$$

$$y \geq 1.003 \text{ (x > 9.7)}$$

has a small particle size, has a high electric constant, and exhibits excellent electric characteristics. Therefore, a small-sized electronic part such as a multi-layer ceramic capacitor can be produced from a dielectric material containing the barium titanate, such as a dielectric ceramic material. Furthermore, an electronic apparatus of small size and light weight can be produced from such an electronic part.

**Claims**

1.   A barium titanate comprising at least one element selected from the group consisting of Sn, Zr, Ca, Sr, Pb, La, Ce, Mg, Bi, Ni, Al, Si, Zn, B, Nb, W, Mn, Fe, Cu, and Dy, said at least one element being in an amount of less than 5 mol% (inclusive of 0 mol%) on the basis of the entirety of $BaTiO_3$, wherein BET specific surface area x (unit: $m^2/g$), and the ratio y of the c-axis length (unit: nm) of a crystal unit lattice to the a-axis length (unit: nm) of the crystal unit lattice as measured by means of a Rietveld method satisfy the following relations:

$$y = \texttt{c-axis length/a-axis length}$$

$$y \geq 1.011 - 8.8 \times 10^{-6} \times x^3 \text{ (wherein x is greater}$$
$$\text{than } 0.1 \text{ and not more than } 9.7)$$

$$y \geq 1.003 \text{ (x > 9.7)}.$$

2.   A barium titanate according to claim 1, which is in the form of powder.

3. A process for producing a barium titanate as recited in claim 1 or 2, comprising reacting a titanium oxide sol with a barium compound in an alkaline solution containing a basic compound, the process comprising a step of reacting the titanium oxide sol with the barium compound while the concentration of a carbonate group contained in the resultant reaction mixture is maintained at 500 mass ppm or less as reduced to $CO_2$; a step of removing the basic compound in the form of gas after completion of reaction; and a step of firing the resultant reaction mixture.

4. A process for producing a barium titanate according to claim 3, wherein the titanium oxide sol is produced through hydrolysis of a titanium compound under acidic conditions.

5. A process for producing a barium titanate according to claim 3 or 4, wherein the titanium oxide sol contains brookite-type crystals.

6. A process for producing a barium titanate according to any one of claims 3 to 5, wherein the basic compound is a substance which can be gasified through evaporation, sublimation, and/or thermal decomposition at a temperature at which firing is performed or lower and at atmospheric pressure or reduced pressure.

7. A process for producing a barium titanate according to claim 6, wherein the basic compound is an organic base.

8. A process for producing a barium titanate according to any one of claims 3 to 7, wherein the alkaline solution has a pH of at least 11.

9. A process for producing a barium titanate according to any one of claims 3 to 8, wherein the step of removing the basic compound in the form of gas is carried out at a temperature falling within a range of room temperature to a temperature at which firing is performed and at atmospheric pressure or reduced pressure.

10. A process for producing a barium titanate according to any one of claims 3 to 8, wherein the firing step includes the step of removing the basic compound in the form of gas.

11. A process for producing a barium titanate according to any one of claims 3 to 10, wherein the firing step is carried out at 300 to 1,200°C.

12. A process for producing a barium titanate according to any one of claims 3 to 11, wherein the reaction mixture of the titanium oxide sol and the barium compound contains a compound of at least one element selected from the group consisting of Sn, Zr, Ca, Sr, Pb, La, Ce, Mg, Bi, Ni, Al, Si, Zn, B, Nb, W, Mn, Fe, Cu, and Dy.

13. A dielectric ceramic comprising a barium titanate as recited in claim 1 or 2.

14. A capacitor comprising a dielectric ceramic as recited in claim 13.

**Patentansprüche**

1. Bariumtitanat, welches mindestens ein Element umfasst, das aus der Gruppe ausgewählt ist, die aus Sn, Zr, Ca, Sr, Pb, La, Ce, Mg, Bi, Ni, A1, Si, Zn, B, Nb, W, Mn, Fe, Cu und Dy besteht, wobei das mindestens eine Element in einer Menge von weniger als 5 Mol% (einschließlich 0 Mol%) auf Basis der Gesamtheit von $BaTiO_3$ vorliegt, wobei der spezifische Oberflächenbereich nach BET x (Einheit: $m^2/g$) und das Verhältnis y der c-Achsenlänge (Einheit: nm) eines Kristalleinheitsgitters zur a-Achsenlänge (Einheit: nm) des Kristalleinheitsgitters, gemessen mittels der Rietveld-Methode, die folgenden Beziehungen erfüllen:

$$y = \text{c-Achsenlänge/a-Achsenlänge}$$

$$y \geq 1{,}011 - 8{,}8 \times 10^{-6} \times x^3 \text{ (wobei x größer als 0,1 und nicht mehr als 9,7 ist)}$$

$$y \geq 1,003 \ (x > 9,7).$$

**2.** Bariumtitanat nach Anspruch 1, welches in Form eines Pulvers vorliegt.

**3.** Verfahren zur Herstellung eines Bariumtitanats nach Anspruch 1 oder 2, welches das Umsetzen eines Titanoxidsols mit einer Bariumverbindung in einer alkalischen Lösung, die eine basische Verbindung enthält, umfasst, wobei das Verfahren einen Schritt des Umsetzens des Titanoxidsols mit der Bariumverbindung, wobei die Konzentration einer Carbonatgruppe, die in dem resultierenden Reaktionsgemisch enthalten ist, bei 500 Massen-ppm oder weniger, reduziert auf $CO_2$, gehalten wird; einen Schritt des Entfernens der basischen Verbindung in der Form von Gas nach Beendigung der Umsetzung; und einen Schritt des Brennens des resultierenden Reaktionsgemischs umfasst.

**4.** Verfahren zur Herstellung eines Bariumtitanats nach Anspruch 3, worin das Titanoxidsol mittels Hydrolyse einer Titanverbindung unter sauren Bedingungen erzeugt wird.

**5.** Verfahren zur Herstellung eines Bariumtitanats nach Anspruch 3 oder 4, wobei das Titanoxidsol Kristalle vom Brookit-Typ enthält.

**6.** Verfahren zur Herstellung eines Bariumtitanats nach einem der Ansprüche 3 bis 5, wobei die basische Verbindung eine Verbindung ist, die durch Verdampfen, Sublimation und/oder thermische Zersetzung bei einer Temperatur, bei welcher das Brennen durchgeführt wird oder darunter und bei Atmosphärendruck oder vermindertem Druck in die Gasphase überführbar ist.

**7.** Verfahren zur Herstellung eines Bariumtitanats nach Anspruch 6, wobei die basische Verbindung eine organische Base ist.

**8.** Verfahren zur Herstellung eines Bariumtitanats nach einem der Ansprüche 3 bis 7, wobei die alkalische Lösung einen pH von mindestens 11 aufweist.

**9.** Verfahren zur Herstellung eines Bariumtitanats nach einem der Ansprüche 3 bis 8, wobei der Schritt des Entfernens der basischen Verbindung in Form von Gas bei einer Temperatur durchgeführt wird, die in einen Bereich von Raumtemperatur bis zu einer Temperatur, bei welcher das Brennen durchgeführt wird, fällt, und bei Atmosphärendruck oder vermindertem Druck durchgeführt wird.

**10.** Verfahren zur Herstellung eines Bariumtitanats nach einem der Ansprüche 3 bis 8, wobei der Schritt des Brennens den Schritt des Entfernens der basischen Verbindung in Form von Gas beinhaltet.

**11.** Verfahren zur Herstellung eines Bariumtitanats nach einem der Ansprüche 3 bis 10, wobei der Schritt des Brennens bei 300 bis 1200°C durchgeführt wird

**12.** Verfahren zur Herstellung eines Bariumtitanats nach einem der Ansprüche 3 bis 11, wobei das Reaktionsgemisch des Titanoxidsols und der Bariumverbindung eine Verbindung mindestens eines Elements enthält, das aus der Gruppe ausgewählt ist, welche aus Sn, Zr, Ca, Sr, Pb, La, Ce, Mg, Bi, Ni, A1, Si, Zn, B, Nb, W, Mn, Fe, Cu und Dy besteht.

**13.** Dielektrische Keramik, welche ein Bariumtitanat nach Anspruch 1 oder 2 umfasst.

**14.** Kondensator, welcher eine dielektrische Keramik nach Anspruch 13 umfasst.

**Revendications**

**1.** Titanate de baryum comprenant au moins un élément choisi dans le groupe constitué par Sn, Zr, Ca, Sr, Pb, La, Ce, Mg, Bi, Ni, Al, Si, Zn, B, Nb, W, Mn, Fe, Cu et Dy, ledit au moins un élément étant présent en une quantité inférieure à 5 % en moles (et englobant 0 % en moles) par rapport à la totalité du $BaTiO_3$, dans lequel la surface spécifique BET x (unité : $m^2/g$) et le rapport y de la longueur de l'axe c (unité : nm) d'un réseau d'unités monocristallines à la longueur de l'axe a (unité : nm) du réseau d'unités monocristallines, mesurés au moyen de la méthode de Rietveld, satisfont aux relations suivantes :

$$y = \text{longueur de l'axe c / longueur de l'axe a}$$

$$y \geq 1{,}011 - 8{,}8 \times 10^{-6} \times x^3 \ (\text{où } x \text{ est supérieur à } 0{,}1 \text{ et ne dépasse pas } 9{,}7)$$

$$y \geq 1{,}003 \ (x > 9{,}7).$$

**2.** Titanate de baryum selon la revendication 1, qui est sous forme de poudre.

**3.** Procédé pour produire un titanate de baryum tel que défini dans la revendication 1 ou 2, comprenant la réaction d'un sol d'oxyde de titane avec un composé du baryum dans une solution alcaline contenant un composé basique, le procédé comprenant une étape consistant à faire réagir le sol d'oxyde de titane avec le composé du baryum cependant que la concentration d'un groupe carbonate contenu dans le mélange réactionnel résultant, ramené au $CO_2$ est maintenue à 500 ppm en masse ou moins ; une étape consistant à éliminer le composé basique sous forme de gaz après que la réaction est terminée ; et une étape consistant à cuire le mélange réactionnel résultant.

**4.** Procédé pour produire un titanate de baryum selon la revendication 3, dans lequel le sol d'oxyde de titane est produit par hydrolyse d'un composé du titane dans des conditions acides.

**5.** Procédé pour produire un titanate de baryum selon la revendication 3 ou 4, dans lequel le sol d'oxyde de titane contient des cristaux de type brookite.

**6.** Procédé pour produire un titanate de baryum selon l'une quelconque des revendications 3 à 5, dans lequel le composé basique est une substance qui peut être rendue gazeuse par évaporation, sublimation et/ou décomposition thermique à une température à laquelle la cuisson est effectuée ou à une température plus basse et sous la pression atmosphérique ou sous une pression réduite.

**7.** Procédé pour produire un titanate de baryum selon la revendication 6, dans lequel le composé basique est une base organique.

**8.** Procédé pour produire un titanate de baryum selon l'une quelconque des revendications 3 à 7, dans lequel la solution alcaline a un pH d'au moins 11.

**9.** Procédé pour produire un titanate de baryum selon l'une quelconque des revendications 3 à 8, dans lequel l'étape consistant à éliminer le composé basique sous forme de gaz est mise en oeuvre à une température située dans la plage allant de la température ambiante à une température à laquelle la cuisson est effectuée, et sous la pression atmosphérique ou sous une pression réduite.

**10.** Procédé pour produire un titanate de baryum selon l'une quelconque des revendications 3 à 8, dans lequel l'étape de cuisson comprend l'étape consistant à éliminer le composé basique sous forme de gaz.

**11.** Procédé pour produire un titanate de baryum selon l'une quelconque des revendications 3 à 10, dans lequel l'étape de cuisson est effectuée à une température de 300 à 1200°C.

**12.** Procédé pour produire un titanate de baryum selon l'une quelconque des revendications 3 à 11, dans lequel le mélange réactionnel du sol d'oxyde de titane et du composé du baryum contient un composé d'au moins un élément choisi dans le groupe constitué par Sn, Zr, Ca, Sr, Pb, La, Ce, Mg, Bi, Ni, Al, Si, Zn, B, Nb, W, Mn, Fe, Cu et Dy.

**13.** Céramique diélectrique comprenant un titanate de baryum tel que défini dans la revendication 1 ou 2.

**14.** Condensateur comprenant une céramique diélectrique telle que définie dans la revendication 13.

**EP 1 415 955 B1**

**REFERENCES CITED IN THE DESCRIPTION**

**Patent documents cited in the description**

- JP 1841875 A
- WO 0035811 A
- US 6205015 B1
- JP 11043327 A
- WO 9958451 A